(19) Europäisches Patentamt
European Patent Office
Office européen des brevets

(11) EP 4 624 540 A1

(12) EUROPEAN PATENT APPLICATION

(43) Date of publication:
**01.10.2025 Bulletin 2025/40**

(21) Application number: **25164830.9**

(22) Date of filing: **19.03.2025**

(51) International Patent Classification (IPC):
***C09D 11/322*** *(2014.01)* ***C08F 220/06*** *(2006.01)*
***C09D 11/326*** *(2014.01)*

(52) Cooperative Patent Classification (CPC):
**C09D 11/326; C08F 220/06; C09D 11/322**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.03.2024 JP 2024048724**

(71) Applicant: **FUJIFILM Corporation**
**Tokyo 106-8620 (JP)**

(72) Inventor: **IKOSHI, Masao**
**Kanagawa, 258-8577 (JP)**

(74) Representative: **Klunker IP**
**Patentanwälte PartG mbB**
**Destouchesstraße 68**
**80796 München (DE)**

# (54) METHOD FOR PRODUCING PIGMENT DISPERSION, METHOD FOR PRODUCING INK JET INK, AND IMAGE RECORDING METHOD

(57) Provided are a method for producing a pigment dispersion, which is capable of producing a pigment dispersion having excellent dispersion stability of a pigment, and applications thereof.

The method for producing a pigment dispersion that includes neutralizing a part of an acid group in a polymer dispersant which contains a (meth)acrylic acid ester unit containing an alkyl group having 10 or more carbon atoms and contains an acid group, dispersing a pigment with the neutralized polymer dispersant to obtain an uncrosslinked dispersion, adding an acid to the uncrosslinked dispersion, and then crosslinking the uncrosslinked dispersion, in which an acid value AV1 after the neutralization, an acid value AV2 after the crosslinking, a degree of neutralization ND1 after the neutralization, and a degree of neutralization ND2 after the acid addition in the polymer dispersant satisfy inequalities (1) and (2); and applications thereof are provided.

$$0.60 \leq AV1(ND1 - ND2)/(AV1 - AV2) \leq 2.00 \text{ ... Inequality (1)}$$

$$0.30 \leq (1 - ND1)/(ND1 - ND2) \leq 5.00 \text{ ... Inequality (2)}$$

EP 4 624 540 A1

## Description

### BACKGROUND OF THE INVENTION

1. Field of the Invention

The present disclosure relates to a method for producing a pigment dispersion, a method for producing an ink jet ink, and an image recording method.

2. Description of the Related Art

In the related art, various studies have been conducted on a production method for producing a pigment dispersion which is used for producing an ink jet ink.

For example, JP2019-14879A discloses a method for producing an aqueous pigment dispersion (that is, a pigment dispersion) and a method for producing an aqueous ink, which have the following steps 1 to 3:

step 1: a step of polymerizing a monomer (a) having an ionic group and a hydrophobic monomer (b) using a polymerization initiator (x) having an ionic group and a polymeric chain transfer agent (y) having an ionic group to obtain a polymer A having an ionic group,
step 2: a step of mixing and dispersing the polymer A obtained in the step 1 and a pigment in an aqueous medium to obtain a pigment aqueous dispersion liquid,
step 3: a step of crosslinking the polymer A in the pigment aqueous dispersion liquid obtained in the step 2 with a polyfunctional compound to obtain an aqueous pigment dispersion.

JP2019-14879A discloses that, with the production method, it is possible to suppress clogging of a jetting nozzle due to solidification of the pigment or the polymer in an ink jetting nozzle and to ensure excellent redispersibility and high fluidity.

### SUMMARY OF THE INVENTION

However, from the viewpoint of further improving jetting stability of the ink jet ink over (that is, jetting stability from the ink jet head), it may be required to further improve dispersion stability of the pigment in the pigment dispersion used for producing the ink jet ink.

An object of an embodiment of the present disclosure is to provide a method for producing a pigment dispersion, which is capable of producing of a pigment dispersion having excellent dispersion stability of a pigment; an ink jet ink having excellent jetting stability over time, and an image recording method capable of recording an image in which bleeding is suppressed.

The present disclosure includes the following aspects.

<1> A method for producing a pigment dispersion, comprising:

a preparation step of preparing a polymer dispersant N which has a structural unit L derived from at least one selected from the group consisting of a (meth)acrylic acid alkyl ester containing an alkyl group having 10 or more carbon atoms and an $\alpha$-olefin containing an alkyl group having 10 or more carbon atoms, and has a structural unit A containing an acid group, in which a proportion of the structural unit L is 20% by mass or more;
a neutralization step of neutralizing a part of the acid group contained in the polymer dispersant N to obtain a polymer dispersant A having a degree of neutralization of less than 100%;
a dispersion step of dispersing a pigment in an aqueous medium by the polymer dispersant A to obtain an uncrosslinked dispersion;
an acid addition step of adding an acid to the uncrosslinked dispersion to reduce the degree of neutralization of the polymer dispersant A in the uncrosslinked dispersion for obtaining a polymer dispersant B; and
a crosslinking step of crosslinking the polymer dispersant B in the uncrosslinked dispersion after the acid addition step to obtain a polymer dispersant C,
in which AV1 which is an acid value of the polymer dispersant A in terms of mgKOH/g, AV2 which is an acid value of the polymer dispersant C in terms of mgKOH/g, ND1 which is the degree of neutralization of the polymer dispersant A in terms of %, and ND2 which is a degree of neutralization of the polymer dispersant B in terms of % satisfy the following inequality (1) and inequality (2),

$$0.60 \leq 0.01 \times AV1 \times (ND1 - ND2)/(AV1 - AV2) \leq 2.00 \text{ ... inequality (1)},$$

$$0.30 \leq (100 - ND1)/(ND1 - ND2) \leq 5.00 \text{ ... inequality (2)}.$$

<2> The method for producing a pigment dispersion according to <1>,
in which AV1 and AV2 satisfy the following inequality (3),

$$120 \leq (1.2 \times AV2) \leq AV1 \leq 330 \text{ ... inequality (3)}.$$

<3> The method for producing a pigment dispersion according to <1> or <2>,
in which, in the polymer dispersant N prepared in the preparation step, an A/L ratio which is a mass ratio of the structural unit A to the structural unit L is 0.5 to 2.0.
<4> The method for producing a pigment dispersion according to any one of <1> to <3>,
in which the structural unit A is a structural unit derived from (meth)acrylic acid.
<5> A method for producing an ink jet ink, comprising:

a step of producing a pigment dispersion by the method for producing a pigment dispersion according to any one of <1> to <4>; and
a step of producing an ink jet ink using the pigment dispersion.

<6> An image recording method comprising:

a step of producing an ink jet ink by the method for producing an ink jet ink according to <5>; and
an ink applying step of applying the ink jet ink onto a substrate by an ink jet method.

<7> The image recording method according to <6>,

in which the substrate is a non-permeable substrate,
the image recording method further includes a step of applying a pretreatment liquid containing water and a coagulating agent onto the non-permeable substrate before the ink applying step, and
in the ink applying step, the ink jet ink is applied onto a region of the non-permeable substrate, onto which the pretreatment liquid has been applied.

According to the embodiment of the present disclosure, there are provided a method for producing a pigment dispersion, which is capable of producing of a pigment dispersion having excellent dispersion stability of a pigment; an ink jet ink having excellent jetting stability over time, and an image recording method capable of recording an image in which bleeding is suppressed.

## BRIEF DESCRIPTION OF THE DRAWINGS

Fig. 1 is a diagram conceptually showing an example of an image recording apparatus used in an image recording method according to the present disclosure.
Fig. 2 is a diagram showing a character image used in Examples.

## DESCRIPTION OF THE PREFERRED EMBODIMENTS

In the present specification, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner.
In addition, in the numerical range described in the present specification, an upper limit value and a lower limit value described in a certain numerical range may be replaced with values shown in Examples.

In the present specification, in a case in which a plurality of substances corresponding to respective components in a composition are present, the amount of the respective components in the composition means the total amount of the plurality of substances present in the composition unless otherwise specified.

In the present specification, a combination of two or more preferred aspects is a more preferred aspect.

In the present specification, the meaning of the term "step" includes not only an independent step but also a step whose intended purpose is achieved even in a case in which the step is not clearly distinguished from other steps.

In the present specification, "(meth)acrylate" is a concept including both acrylate and methacrylate. In addition, "(meth)acryl" is a concept that includes both acryl and methacryl.

Method for Producing Pigment Dispersion

The method for producing a pigment dispersion according to the present disclosure is a method for producing a pigment dispersion, including a preparation step of preparing a polymer dispersant N which has a structural unit L derived from at least one selected from the group consisting of a (meth)acrylic acid alkyl ester containing an alkyl group having 10 or more carbon atoms and an $\alpha$-olefin containing an alkyl group having 10 or more carbon atoms, and has a structural unit A containing an acid group, in which a proportion of the structural unit L is 20% by mass or more; a neutralization step of neutralizing a part of the acid group contained in the polymer dispersant N to obtain a polymer dispersant A having a degree of neutralization of less than 100%; a dispersion step of dispersing a pigment in an aqueous medium by the polymer dispersant A to obtain an uncrosslinked dispersion; an acid addition step of adding an acid to the uncrosslinked dispersion to reduce the degree of neutralization of the polymer dispersant A in the uncrosslinked dispersion for obtaining a polymer dispersant B; and a crosslinking step of crosslinking the polymer dispersant B in the uncrosslinked dispersion after the acid addition step to obtain a polymer dispersant C, in which AV1 which is an acid value of the polymer dispersant A in terms of mgKOH/g, AV2 which is an acid value of the polymer dispersant C in terms of mgKOH/g, ND1 which is the degree of neutralization of the polymer dispersant A in terms of %, and ND2 which is a degree of neutralization of the polymer dispersant B in terms of % satisfy the following inequality (1) and inequality (2).

$$0.60 \leq 0.01 \times \mathrm{AV1} \times (\mathrm{ND1} - \mathrm{ND2})/(\mathrm{AV1} - \mathrm{AV2}) \leq 2.00 \ \ldots \text{Inequality (1)}$$

$$0.30 \leq (100 - \mathrm{ND1})/(\mathrm{ND1} - \mathrm{ND2}) \leq 5.00 \ \ldots \text{Inequality (2)}$$

With the method for producing a pigment dispersion according to the present disclosure, it is possible to produce a pigment dispersion having excellent dispersion stability of a pigment.

In the present disclosure, the dispersion stability of the pigment in the pigment dispersion is evaluated using, as an indicator, jetting stability of the ink jet ink produced using the pigment dispersion over time.

The above-described effect of the method for producing a pigment dispersion according to the present disclosure is considered to be obtained as follows.

In the method for producing a pigment dispersion according to the present disclosure, first, the polymer dispersant N in which the proportion of the structural unit L is 20% by mass or more is prepared. The structural unit L is a structural unit containing a long-chain alkyl group having 10 or more carbon atoms. The long-chain alkyl group has excellent adsorptivity to a pigment. Therefore, the polymer dispersant N has an effect of excellent adsorptivity to the pigment, which is a premise for the effect of the dispersion stability of the pigment.

The polymer dispersant N is sequentially changed to the polymer dispersant A, the polymer dispersant B, and the polymer dispersant C in the process of neutralization, acid addition, and crosslinking. However, the structural unit L is maintained in the polymer dispersant (that is, in the polymer dispersant A, the polymer dispersant B, and the polymer dispersant C) even in the process of the change.

In addition, the polymer dispersant N has the structural unit A containing an acid group. The acid group in the structural unit A can contribute to affinity for an aqueous medium (that is, water or a mixed solvent of water and a water-soluble organic solvent), which is a premise for the effect of the dispersion stability of the pigment.

The concept of the acid group in the present disclosure includes both an unneutralized acid group (for example, a -COOH group (a carboxy group)) and a neutralized acid group (for example, a $-COO^-$ group (a carboxylate group)).

The method for producing a pigment dispersion according to the present disclosure includes the neutralization step of neutralizing a part of the acid group contained in the polymer dispersant N to obtain the polymer dispersant A having a degree of neutralization (ND1) of less than 100%.

Here, the degree of neutralization refers to a percentage (%) of the number of neutralized acid groups with respect to the total number of unneutralized acid groups and neutralized acid groups.

The neutralized acid group has higher affinity for the aqueous medium than the unneutralized acid group.

Therefore, affinity of the polymer dispersant to the aqueous medium is increased by the neutralization step.

A certain degree of affinity of the polymer dispersant to the aqueous medium contributes to improvement of the dispersion stability of the pigment.

However, in a case where the affinity of the polymer dispersant to the aqueous medium is too high, an adsorption state with respect to the pigment cannot be maintained, and thus the dispersion stability of the pigment is rather lowered. In consideration of this point, in the neutralization step, the neutralization is carried out to such an extent that the degree of neutralization (ND1) is less than 100%.

The method for producing a pigment dispersion according to the present disclosure includes the dispersion step of dispersing a pigment in an aqueous medium by the polymer dispersant A to obtain an uncrosslinked dispersion.

In the dispersion step, the pigment is dispersed in the aqueous medium using the polymer dispersant A adjusted to a degree of neutralization not being too low and not being too high.

In the uncrosslinked dispersion obtained in the dispersion step, it is considered that the pigment is dispersed in the aqueous medium in a state in which the polymer dispersant A is adsorbed on a surface of the pigment.

As described above, the polymer dispersant A has excellent adsorptivity to the pigment and also has a certain degree of affinity to the aqueous medium.

Therefore, it is considered that a certain degree of pigment dispersibility, which is a premise for the effect of the dispersion stability of the pigment, is achieved in the uncrosslinked dispersion.

The method for producing a pigment dispersion according to the present disclosure includes the acid addition step of adding an acid to the uncrosslinked dispersion to reduce a degree of neutralization of the polymer dispersant A in the uncrosslinked dispersion for obtaining a polymer dispersant B.

In the acid addition step, a polymer dispersant B having a degree of neutralization of ND2 is obtained by reducing the degree of neutralization (ND1) of the polymer dispersant A, which is less than 100%. In the acid addition step, the number of neutralized acid groups is reduced and the number of unneutralized acid groups is increased in the polymer dispersant. In this manner, in the acid addition step, the polymer dispersant A adsorbed on the surface of the pigment is changed to the polymer dispersant B by lowering the affinity of the polymer dispersant A to the aqueous medium, and thus release of the polymer dispersant B from the surface of the pigment is suppressed.

The method for producing a pigment dispersion according to the present disclosure includes the crosslinking step of crosslinking the polymer dispersant B in the uncrosslinked dispersion after the acid addition step to obtain a polymer dispersant C.

In the crosslinking step, the polymer dispersant B adsorbed on the surface of the pigment in the uncrosslinked dispersion after the acid addition step is crosslinked to obtain the polymer dispersant C. In this manner, release of the polymer dispersant C from the surface of the pigment is further suppressed.

In the crosslinking step, at least one of the unneutralized acid group or the neutralized acid group is consumed for the formation of the crosslinking, and thus an acid value of the polymer dispersant is reduced.

Here, the acid value (mgKOH/g) of the polymer dispersant corresponds to the number of acid groups in the polymer dispersant (that is, the total number of the unneutralized acid groups and the neutralized acid groups).

In the method for producing a pigment dispersion according to the present disclosure, the acid value does not change in the polymer dispersant N, the polymer dispersant A, and the polymer dispersant B, but the acid value decreases in the process of changing from the polymer dispersant B to the polymer dispersant C.

In the present disclosure, an acid value of the polymer dispersant A is indicated by AV1 (mgKOH/g), and an acid value of the polymer dispersant C is indicated by AV2 (mgKOH/g).

As described above, since the acid group is consumed by the crosslinking, AV2 is lower than AV1.

In the method for producing a pigment dispersion according to the present disclosure, AV1 which is the acid value of the polymer dispersant A in terms of mgKOH/g, AV2 which is the acid value of the polymer dispersant C in terms of mgKOH/g, ND1 which is the degree of neutralization of the polymer dispersant A in terms of %, and ND2 which is the degree of neutralization of the polymer dispersant B in terms of % satisfy the following inequality (1) and inequality (2).

$$0.60 \leq 0.01 \times \mathrm{AV1} \times (\mathrm{ND1} - \mathrm{ND2})/(\mathrm{AV1} - \mathrm{AV2}) \leq 2.00 \ \ldots \ \text{Inequality (1)}$$

$$0.30 \leq (100 - \mathrm{ND1})/(\mathrm{ND1} - \mathrm{ND2}) \leq 5.00 \ \ldots \ \text{Inequality (2)}$$

In the following, the "$0.01 \times \mathrm{AV1} \times (\mathrm{ND1} - \mathrm{ND2})/(\mathrm{AV1} - \mathrm{AV2})$" in the inequality (1) is defined as a value (1).

The inequality (1) can be rewritten as $0.60 \leq$ Value (1) $\leq 2.00$.

The numerator "$0.01 \times \mathrm{AV1} \times (\mathrm{ND1} - \mathrm{ND2})$" in the value (1) corresponds to the number of neutralized acid groups reduced by the acid addition step (that is, a degree of reduction in the number of neutralized acid groups due to the acid addition step).

The denominator "(AV1 - AV2)" in the value (1) corresponds to the number of acid groups reduced by the crosslinking step (that is, a degree of reduction in the number of acid groups due to the crosslinking step).

In the inequality (1), "0.60 ≤ Value (1)" means that the degree of reduction in the number of neutralized acid group due to the acid addition step is relatively large, from the numerator.

By the "0.60 ≤ Value (1)", the affinity of the polymer dispersant B to the aqueous solvent is suppressed from being excessively high, and as a result, separation of the polymer dispersant B from the surface of the pigment is suppressed. In this manner, the dispersion stability of the pigment is improved.

In addition, in the inequality (1), "0.60 ≤ Value (1)" means that the degree of reduction in the number of acid groups due to the crosslinking step is not too large, from the denominator.

By the "0.60 ≤ Value (1)", the affinity of the polymer dispersant C to the aqueous solvent is suppressed from being excessively low, and as a result, sedimentation of the pigment on which the polymer dispersant C is adsorbed is suppressed. In this manner, the dispersion stability of the pigment is improved.

In the inequality (1), "Value (1) ≤ 2.00" means that the degree of reduction in the number of neutralized acid group due to the acid addition step is not too large, from the numerator.

By the "Value (1) ≤ 2.00", the affinity of the polymer dispersant B to the aqueous solvent is suppressed from being excessively low, and as a result, sedimentation of the pigment on which the polymer dispersant B is adsorbed is suppressed. In this manner, the dispersion stability of the pigment is improved.

In Inequality (1), "Value (1) ≤ 2.00" means that the degree of reduction of the acid group by the crosslinking step is not too small, from the denominator.

By the "Value (1) ≤ 2.00", the affinity of the polymer dispersant C to the aqueous solvent is suppressed from being excessively high, and as a result, separation of the polymer dispersant C from the surface of the pigment is suppressed. In this manner, the dispersion stability of the pigment is improved.

In the following, the "(100 - ND1)/(ND1 - ND2)" in the inequality (2) is defined as a value (2).

The inequality (2) can be rewritten as 0.30 ≤ Value (2) ≤ 5.00.

The numerator "(100-ND1)" in the value (2) corresponds to the number of unneutralized acid groups remaining after the neutralization step (that is, a degree of residual of the unneutralized acid groups remaining after the neutralization step).

The denominator "(ND1 - ND2)" in the value (2) corresponds to the number of neutralized acid groups reduced by the acid addition step (that is, a degree of reduction in the number of neutralized acid groups due to the acid addition step).

In the inequality (2), "0.30 ≤ Value (2)" means that the number of unneutralized acid groups remaining after the neutralization step is relatively large, from the numerator.

By the "0.30 ≤ Value (2)", the affinity of the polymer dispersant A to the aqueous solvent is suppressed from being excessively high, and as a result, in the dispersion step, the polymer dispersant A is easily adsorbed on the surface of the pigment. In this manner, the dispersion stability of the pigment is improved.

In the inequality (2), "0.30 ≤ Value (2)" means that the degree of reduction in the number of neutralized acid group due to the acid addition step is not too large, from the denominator.

By the "0.30 ≤ Value (2)", the affinity of the polymer dispersant B to the aqueous solvent is suppressed from being excessively low, and as a result, sedimentation of the pigment on which the polymer dispersant B is adsorbed is suppressed. In this manner, the dispersion stability of the pigment is improved.

In the inequality (2), "Value (2) ≤ 5.00" means that the number of unneutralized acid groups remaining after the neutralization step is not too large, from the numerator.

By the "Value (2) ≤ 5.00", the affinity of the polymer dispersant A to the aqueous solvent is suppressed from being excessively low, and as a result, in the dispersion step, the pigment on which the polymer dispersant A is adsorbed is easily dispersed in the aqueous medium. In this manner, the dispersion stability of the pigment is improved.

In the inequality (2), "Value (2) ≤ 5.00" means that the degree of reduction in the number of neutralized acid group due to the acid addition step is not too small, from the denominator.

By the "Value (2) ≤ 5.00", the affinity of the polymer dispersant B to the aqueous solvent is suppressed from being excessively high, and as a result, peeling of the polymer dispersant B from the pigment on which the polymer dispersant B is adsorbed is suppressed. In this manner, the dispersion stability of the pigment is improved.

With the method for producing a pigment dispersion according to the present disclosure, it is considered that the above-described effect of excellent dispersion stability of the pigment is exhibited.

Hereinafter, the method for producing a pigment dispersion according to the present disclosure will be described in more detail.

## Preparation Step

The method for producing a pigment dispersion according to the present disclosure includes a preparation step of preparing a polymer dispersant N which has a structural unit L derived from a (meth)acrylic acid alkyl ester containing an alkyl group having 10 or more carbon atoms and a structural unit A containing an acid group, in which a proportion of the structural unit L is 20% by mass or more.

The preparation step may be a step of synthesizing the polymer dispersant N, or a step of preparing the already synthesized polymer dispersant N for the implementation of the method for producing a pigment dispersion according to the present disclosure.

Polymer Dispersant N

The polymer dispersant N is a polymer dispersant which has the structural unit L derived from at least one selected from the group consisting of a (meth)acrylic acid alkyl ester containing an alkyl group having 10 or more carbon atoms and an α-olefin containing an alkyl group having 10 or more carbon atoms, and has the structural unit A containing an acid group, in which the proportion of the structural unit L (that is, a proportion of the structural unit L to the entire polymer dispersant) is 20% by mass or more.

Structural Unit L

The structural unit L is a structural unit derived from at least one selected from the group consisting of a (meth) acrylic acid alkyl ester containing an alkyl group having 10 or more carbon atoms and an α-olefin containing an alkyl group having 10 or more carbon atoms.
The polymer dispersant N may have only one kind of the structural unit L, or may have two or more kinds thereof.
The polymer dispersant N may have, as the structural unit L, at least one kind of structural unit derived from a (meth)acrylic acid alkyl ester containing an alkyl group having 10 or more carbon atoms, and at least one kind of structural unit derived from an α-olefin containing an alkyl group having 10 or more carbon atoms.
In the structural unit L, the alkyl group having 10 or more carbon atoms (for example, $R^2$ in Formula (L1) described later) contributes to the adsorptivity to the surface of the pigment. As a result, the effect of the dispersion stability in the present disclosure is exhibited.
From the viewpoint of further improving the effect of the dispersion stability, the number of carbon atoms in the alkyl group is preferably 14 or more, and more preferably 16 or more.
The upper limit of the number of carbon atoms in the alkyl group is not particularly limited, but the number of carbon atoms in the alkyl group is preferably 30 or less, more preferably 26 or less, and still more preferably 22 or less.
Among the structural units L, the structural unit derived from a (meth)acrylic acid alkyl ester containing an alkyl group having 10 or more carbon atoms is a structural unit represented by Formula (L1).

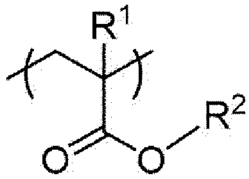

(L1)

In Formula (L1), $R^1$ represents a hydrogen atom or a methyl group, and $R^2$ represents an alkyl group having 10 or more carbon atoms.
A preferred range of the number of carbon atoms in the alkyl group represented by $R^2$ is as described above.
The proportion of the structural unit L to the entire polymer dispersant is 20% by mass or more.
As a result, the effect of the dispersion stability in the present disclosure is exhibited.
From the viewpoint of further improving the effect of the dispersion stability, the proportion of the structural unit L to the entire polymer dispersant is preferably 25% by mass or more, and more preferably 30% by mass or more.
The upper limit of the proportion of the structural unit L to the entire polymer dispersant is not particularly limited. The proportion of the structural unit L is preferably 80% by mass or less, more preferably 70% by mass or less, still more preferably 60% by mass or less, and even more preferably 50% by mass or less.

Structural Unit A

The polymer dispersant N has the structural unit A containing an acid group.
As described above, the acid group may be a neutralized acid group or an unneutralized acid group.
The polymer dispersant N may have only one kind of the structural unit A, or may have two or more kinds thereof.
The unneutralized acid group is preferably a carboxy group (-COOH group).
The neutralized acid group is preferably a -COOM group (here, M represents an alkali metal ion, an ammonium ion, or an organic cation).
The alkali metal is preferably a potassium ion or a sodium ion, and more preferably a sodium ion.

Examples of an organic cation include an alkylammonium cation having 1 to 10 carbon atoms, a hydroxy-substituted alkylammonium cation having 1 to 10 carbon atoms, a carboxy-substituted alkylammonium cation having 2 to 10 carbon atoms, and an organic cation having 2 to 10 alkyleneimine units having 2 to 4 carbon atoms.
The structural unit A is preferably a structural unit derived from (meth)acrylic acid.
A proportion of the structural unit A to the entire polymer dispersant N is preferably 20% by mass or more, more preferably 25% by mass or more, and still more preferably 30% by mass or more.
The upper limit of the proportion of the structural unit A to the entire polymer dispersant N is not particularly limited. The proportion of the structural unit A is preferably 80% by mass or less, more preferably 70% by mass or less, still more preferably 60% by mass or less, and even more preferably 50% by mass or less.
In the polymer dispersant N, an A/L ratio which is a mass ratio of the structural unit A to the structural unit L is preferably 0.3 to 3.0, more preferably 0.5 to 2.0, and still more preferably 0.5 to 1.5.

Other Structural Units

The polymer dispersant N may have at least one structural unit other than the above-described structural units.
Examples of other structural units include a structural unit represented by Formula (2) (hereinafter, also referred to as a unit of Formula (2)).

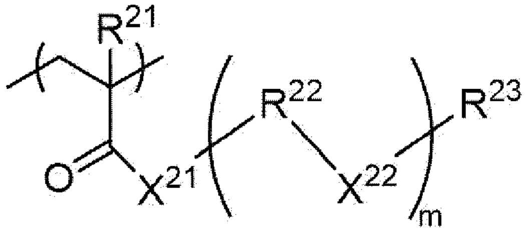 (2)

In Formula (2), $R^{21}$ represents a hydrogen atom or an alkyl group having 1 to 4 carbon atoms, $R^{22}$ represents an alkylene group having 2 to 5 carbon atoms, $R^{23}$ represents an aromatic group, $X^{21}$ and $X^{22}$ each independently represent -O- or -NH-, and m represents an integer of 2 or more.
In Formula (2), $R^{21}$ represents a hydrogen atom or an alkyl group having 1 to 4 carbon atoms.
$R^{21}$ is preferably a hydrogen atom or an alkyl group having 1 to 3 carbon atoms, more preferably a hydrogen atom, a methyl group, or an ethyl group, and still more preferably a hydrogen atom or a methyl group.
In Formula (2), $R^{22}$ represents an alkylene group having 2 to 5 carbon atoms.
$R^{22}$ is preferably an alkylene group having 2 to 4 carbon atoms, more preferably an alkylene group having 2 or 3 carbon atoms, and still more preferably an alkylene group having 2 carbon atoms.
In Formula (2), $R^{23}$ represents an aromatic group.
The aromatic group represented by $R^{23}$ includes at least one aromatic ring.
The aromatic ring in the aromatic group represented by $R^{23}$ may be a monocyclic ring or a polycyclic (fused) ring.
The aromatic group represented by $R^{23}$ may include a group in which monocyclic rings are linked (for example, a biphenyl group).
The aromatic group represented by $R^{23}$ may include a heteroatom (for example, an oxygen atom).
The aromatic ring in the aromatic group represented by $R^{23}$ may have a substituent.
Examples of the substituent on the aromatic ring include a linear or branched hydrocarbon group (for example, a linear or branched alkyl group, a linear or branched alkenyl group, a linear or branched alkynyl group, and the like) having 1 to 30 carbon atoms (more preferably 1 to 20 carbon atoms), and a halogen atom.
The number of carbon atoms in the aromatic group represented by $R^{23}$ is preferably 4 to 30, more preferably 6 to 30, still more preferably 6 to 25, and even more preferably 6 to 20.
The aromatic group represented by $R^{23}$ is preferably a phenyl group, a naphthyl group, a furyl group, a biphenyl group, or an alkylphenyl group having 7 to 30 carbon atoms (preferably 7 to 25 carbon atoms and more preferably 7 to 20 carbon atoms).
In Formula (2), $X^{21}$ and $X^{22}$ each independently represent -O- or -NH-.
It is preferable that $X^{21}$ and $X^{22}$ are each -O-.
In Formula (2), m represents an integer of 2 or more.
m is preferably an integer of 2 to 30, more preferably an integer of 2 to 20, and still more preferably an integer of 2 to 10.
In a case where the polymer dispersant N has the unit of Formula (2), a proportion of the unit of Formula (2) to the entire polymer dispersant N is preferably 50% by mass or less, more preferably 2% by mass to 50% by mass, still more

preferably 3% by mass to 40% by mass, and even more preferably 10% by mass to 40% by mass.

Examples of the other structural units also include a structural unit derived from methyl (meth)acrylate.

In a case where the polymer dispersant N has the structural unit derived from methyl (meth)acrylate, a proportion of the structural unit derived from methyl (meth)acrylate to the entire polymer dispersant N is preferably 10% by mass or less, more preferably 1% by mass to 10% by mass, and still more preferably 1% by mass to 5% by mass.

Weight-Average Molecular Weight (Mw) of Polymer Dispersant N

A weight-average molecular weight (Mw) of the polymer dispersant N is not particularly limited, but from the viewpoint of dispersibility of the pigment, it is preferably 3,000 to 100,000, more preferably 5,000 to 80,000, still more preferably 10,000 to 60,000, and even more preferably 15,000 to 50,000.

In the present disclosure, the weight-average molecular weight (Mw) is measured by gel permeation chromatography (GPC). In the GPC, HLC-8220 GPC (manufactured by Tosoh Corporation) is used, three columns of TSKgeL Super HZM-H, TSKgeL Super HZ4000, and TSKgeL Super HZ2000 (all trade names manufactured by Tosoh Corporation) are used as columns while being connected in series, and tetrahydrofuran (THF) is used as an eluent. As the conditions, a sample concentration of 0.45% by mass, a flow rate of 0.35 ml/min, a sample injection amount of 10 μl, and a measurement temperature of 40°C are set, and a differential refractive index detector is used. In addition, the calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

Neutralization Step

The method for producing a pigment dispersion according to the present disclosure includes a neutralization step of neutralizing a part of the acid group contained in the polymer dispersant N to obtain a polymer dispersant A having a degree of neutralization (that is, ND1) of less than 100%.

The degree of neutralization ND1 is preferably 40% to 95% and more preferably 50% to 90%.

The neutralization can be carried out by reacting a base (hereinafter, also referred to as "neutralizing base") with the polymeric dispersant N containing the unneutralized acid group.

Examples of the neutralizing base include alkali metal hydroxides such as sodium hydroxide and potassium hydroxide; ammonia; and organic amines such as dimethylethanolamine and diisopropylethylamine.

Dispersion Step

The method for producing a pigment dispersion according to the present disclosure includes a dispersion step of dispersing a pigment in an aqueous medium by the polymer dispersant A to obtain an uncrosslinked dispersion.

In the present disclosure, the aqueous medium refers to water or a mixed solvent of water and a water-soluble organic solvent.

In the present disclosure, the "water-soluble" means a property that 1 g or more of a substance is dissolved in 100 g of water at 25°C.

Specific examples of the water-soluble organic solvent are the same as the water-soluble organic solvent which can be contained in the ink jet ink, which will be described later.

The pigment is not particularly limited, and may be an organic pigment or an inorganic pigment.

Examples of the pigment include pigments described in "Encyclopedia of Pigments" edited by Seishiro Ito (2000), "Industrial Organic Pigments", W. Herbst, K. Hunger, and pigments described in known documents such as JP2002-12607A, JP2002-188025A, JP2003-26978A, JP2003-342503A, and JP2015-193729A.

Examples of the pigment include polycyclic pigments such as an azolake pigment, an azo pigment, a phthalocyanine pigment, a perylene pigment, a perinone pigment, an anthraquinone pigment, a quinacridone pigment, a dioxazine pigment, a diketopyrrolopyrrole pigment, a thioindigo pigment, an isoindolinone pigment, and a quinophthalone pigment; organic pigments such as a nitro pigment, a nitroso pigment, aniline black, and a daylight fluorescent pigment; and inorganic pigments such as titanium oxide, iron oxide, and carbon black.

As the pigment, an azo pigment, a phthalocyanine pigment, an anthraquinone pigment, a quinacridone pigment, or a carbon black pigment is preferable.

With regard to the pigment, the description in a known reference such as JP5404669B may be appropriately referred to.

From the viewpoint of color tone, examples of the pigment include a cyan pigment, a magenta pigment, a yellow pigment, a black pigment, and a white pigment.

A content of the pigment is preferably 1% by mass to 40% by mass, more preferably 3% by mass to 30% by mass, still more preferably 5% by mass to 25% by mass, and even more preferably 10% by mass to 20% by mass with respect to

the total amount of the pigment dispersion.

The dispersion step can be carried out by a known method using a dispersion device such as a beads mill.

The total amount of the aqueous medium, the pigment, and the polymer dispersant N with respect to the total amount of the uncrosslinked dispersion is preferably 70% by mass or more, more preferably 80% by mass or more, and still more preferably 90% by mass or more.

The neutralization step and the dispersion step may be carried out in the order of the neutralization step and the dispersion step, or may be carried out at the same time.

In a case of being carried out simultaneously, the pigment, the polymer dispersant N, the aqueous medium, and the neutralizing base for the neutralization are charged, and the dispersion is carried out. As a result, the pigment is dispersed while forming the polymer dispersant A.

Acid Addition Step

The method for producing a pigment dispersion according to the present disclosure includes an acid addition step of adding an acid to the uncrosslinked dispersion to reduce a degree of neutralization of the polymer dispersant A in the uncrosslinked dispersion for obtaining a polymer dispersant B.

The acid addition step is an operation of returning the acid group neutralized by the neutralization step to the unneutralized acid group.

The acid addition step is one of steps of adjusting the amount of the neutralized acid group having excellent affinity for the aqueous medium to an appropriate amount, neither too much nor too little.

In the acid addition step, it is considered that the polymer dispersant B having a degree of neutralization of ND2 is obtained by reducing the degree of neutralization of the polymer dispersant A adsorbed on the surface of the pigment in the uncrosslinked dispersion.

Examples of the acid used in the acid addition step include hydrochloric acid, acetic acid, citric acid, malonic acid, boric acid, and maleic acid.

Examples of specific operation of the acid addition step include a general operation of adding the acid while stirring the uncrosslinked dispersion and further stirring the dispersion.

Crosslinking Step

The method for producing a pigment dispersion according to the present disclosure includes a crosslinking step of crosslinking the polymer dispersant B in the uncrosslinked dispersion after the acid addition step to obtain a polymer dispersant C.

By the crosslinking step, a crosslinked dispersion (that is, a pigment dispersion) in which the pigment is dispersed by the polymer dispersant C which is a crosslinked polymer is obtained.

In the crosslinking step of the present disclosure, the polymer dispersant B adsorbed on the surface of the pigment is crosslinked to be difficult to be released, and the amount of the acid group of the polymer dispersant B is adjusted to an appropriate amount, neither too much nor too little, by the crosslinking.

Crosslinking Agent

The crosslinking can be carried out using a crosslinking agent.

The polymer dispersant C in this case is preferably a reaction product of the polymer dispersant B containing an acid group and the crosslinking agent. A crosslinking structure in this case is a structure formed by a reaction (for example, an acid-epoxy reaction) between the acid group and the crosslinking agent (for example, an epoxy group in an epoxy compound).

As the crosslinking agent, a compound having two or more reaction sections (preferably, epoxy groups) with the polymer dispersant B containing an acid group is preferable.

Specific examples of a bi- or higher functional epoxy compound, which is a preferred aspect of the crosslinking agent, include ethylene glycol diglycidyl ether, polyethylene glycol diglycidyl ether, 1,6-hexanediol diglycidyl ether, diethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable.

As the crosslinking agent, a commercially available product can also be used.

As the commercially available product, for example, Denacol EX-321, EX-821, EX-830, EX-850, and EX-851 (manufactured by Nagase ChemteX Corporation), and the like can be used.

Other Steps

The method for producing a pigment dispersion according to the present disclosure may include other steps in addition to the above-described steps.

Examples of the other steps include a step of removing coarse particles from the crosslinked dispersion obtained in the crosslinking step by centrifugal treatment, filtration, or the like.

Inequality (1)

$$0.60 \leq 0.01 \times AV1 \times (ND1 - ND2)/(AV1 - AV2)\ [= \text{Value (1)}] \leq 2.00 \ldots \text{Inequality (1)}$$

The meaning of the inequality (1) is as described above.

The value (1) is 0.60 or more, preferably 0.62 or more and more preferably 0.65 or more.

The value (1) is 2.00 or less, preferably 1.50 or less and more preferably 1.20 or less.

The acid value AV1 (unit: mgKOH/g) of the polymer dispersant A is preferably 100 to 350, more preferably 150 to 330, and still more preferably 150 to 300.

The acid value AV2 (unit: mgKOH/g) of the polymer dispersant C is preferably 100 to 300 and more preferably 100 to 250. In principle, AV2 is a smaller value than AV1.

AV1 and AV2 preferably satisfy the following inequality (3).

$$120 \leq (1.2 \times AV2) \leq AV1 \leq 330 \ldots \text{Inequality (3)}$$

"$120 \leq (1.2 \times AV2)$" in the inequality (3) means that a value of 1.2 times AV2 is 120 or more.
"$(1.2 \times AV2) \leq AV1$" in the inequality (3) means that AV1 is a value equal to or more than 1.2 times AV2.
"$AV1 \leq 330$" in the inequality (3) means that AV1 is 330 or less.

In the present disclosure, the acid values (AV1 and AV2) of the polymer dispersant are calculated by the following method.

For AV1, a solution of the polymer dispersant A is diluted 100-fold in terms of volume with a tetrahydrofuran aqueous solution (aqueous solution of THF/pure water = 4:1) to prepare a diluted liquid, and the obtained diluted liquid is completely neutralized with KOH, and then titrated with HCl to calculate AV1.

For AV2, a pigment dispersion liquid in which the pigment is dispersed by the polymer dispersant C (that is, a pigment dispersion liquid after crosslinking) is diluted 20-fold in terms of volume with a tetrahydrofuran aqueous solution (aqueous solution of THF/pure water = 4:1) to prepare a diluted liquid, and the obtained diluted liquid is completely neutralized with KOH, and then titrated with HCl to calculate AV2.

In the measurement of each of AV1 and AV2, in a case where the dispersant is not dissolved in THF, a solvent other than THF can be used. As the solvent other than THF, for example, dimethyl sulfoxide, 2-methylpyrrolidone, or an aqueous solution thereof can be used, but the solvent is not limited thereto.

The degree of neutralization ND1 (%) of the polymer dispersant A is preferably 40 to 95 and more preferably 50 to 90.

The degree of neutralization ND2 (%) of the polymer dispersant B is preferably 20 to 80 and more preferably 30 to 70. In principle, ND2 is a smaller value than ND1.

In the present disclosure, the degree of neutralization (ND1 and ND2) of the polymer dispersant is calculated by the following method.

ND1 is calculated as follows.

A diluted liquid is prepared by diluting the uncrosslinked dispersion obtained in the dispersion step (that is, the uncrosslinked dispersion in which the pigment is dispersed by the polymer dispersant A) with a tetrahydrofuran aqueous solution (aqueous solution of THF/pure water = 4:1) by 20-fold in terms of volume, and the obtained diluted liquid is titrated with HCl to calculate the acid value of the neutralized acid group. The obtained acid value is divided by AV1 described above, and the obtained value is expressed in terms of a percentage (%) to obtain ND1.

ND2 is calculated as follows.

A diluted liquid is prepared by diluting the pigment dispersion liquid in which the pigment is dispersed by the polymer dispersant C (that is, a pigment dispersion liquid after crosslinking) with a tetrahydrofuran aqueous solution (aqueous solution of THF/pure water = 4:1) by 20-fold in terms of volume, and the obtained diluted liquid is titrated with HCl to calculate the acid value of the neutralized acid group. The obtained acid value is divided by AV2 described above, and the obtained value is expressed in terms of a percentage (%) to obtain ND2.

<Inequality (2)>

$$0.30 \leq (100 - ND1)/(ND1 - ND2)\ [= \text{Value (2)}] \leq 5.00\ \ldots\ \text{Inequality (2)}$$

The meaning of the inequality (2) is as described above.
The value (2) is 0.30 or more, preferably 0.40 or more and more preferably 0.50 or more.
The value (2) is 5.00 or less, preferably 3.50 or less and more preferably 2.50 or less.

Method for Producing Ink Jet Ink

The method of producing an ink jet ink (hereinafter, also simply referred to as "ink") according to the present disclosure includes a step of producing a pigment dispersion by the above-described method of producing a pigment dispersion according to the present disclosure, and a step of producing an ink using the pigment dispersion. The method of producing an ink according to the present disclosure may include other steps as necessary.
In the method for producing an ink according to the present disclosure, since the ink is produced using a pigment dispersion having excellent dispersion stability of the pigment, an ink having excellent jetting stability over time can be produced.

Step of Producing Pigment Dispersion

The step of producing the pigment dispersion can refer to the method for producing a pigment dispersion according to the present disclosure described above.

Step of Producing Ink

The step of producing the ink is a step of producing an ink using the above-described pigment dispersion.
In the step of producing the ink, the ink jet ink is preferably produced by mixing at least the above-described pigment dispersion, water, a water-soluble organic solvent, and optionally, other components.
A method of mixing the respective components is not particularly limited, and a general method such as a method of mixing the respective components while stirring can be adopted. After the mixing, filtration may be carried out as necessary.

Pigment

In the ink to be produced, from the viewpoint of image density and jettability, a content of the pigment is preferably 1% by mass to 25% by mass, more preferably 2% by mass to 25% by mass, and still more preferably 3% by mass to 20% by mass with respect to the total amount of the ink.

Polymer Dispersant C

In the ink to be produced, a ratio of the content of the pigment and a content of the polymer dispersant C (that is, a polymer dispersant having a crosslinking structure) is preferably 1:0.04 to 1:3, more preferably 1:0.05 to 1:1, and still more preferably 1:0.05 to 1:0.5 based on mass.
In the ink to be produced, the content of the polymer dispersant C is preferably 0.1% by mass to 10% by mass, more preferably 0.3% by mass to 5% by mass, and still more preferably 0.5% by mass to 2.5% by mass with respect to the total amount of the ink.

Water

A content of the water in the ink to be produced is preferably 10% by mass or more, more preferably 20% by mass or more, still more preferably 30% by mass or more, and particularly preferably 50% by mass or more with respect to the total amount of the ink.
The upper limit of the content of the water is appropriately determined according to contents of other components, and is, for example, 99% by mass, preferably 95% by mass, and more preferably 90% by mass with respect to the total amount of the ink.
The content of the water herein is the total amount of the amount contained in the pigment dispersion and the amount added in the stage of producing the ink.

Water-Soluble Organic Solvent

In the present disclosure, "water-soluble" in the "water-soluble organic solvent" means a property of being dissolved in 1 g or more in 100 g of water at 25°C.
The type of the water-soluble organic solvent which can be used in the production of the ink is not particularly limited, and examples thereof include monoalcohol having 1 to 4 carbon atoms; diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; triol such as glycerin, 1,2,6-hexanetriol, and trimethylolpropane; alkylene glycol such as ethylene glycol and propylene glycol; alkylene glycol monoalkyl ether such as ethylene glycol monoalkyl ether and propylene glycol monoalkyl ether; polyalkylene glycol such as diethylene glycol, triethylene glycol, tetraethylene glycol, pentaethylene glycol, dipropylene glycol, and polyoxyethylene polyoxypropylene glycol; polyalkylene glycol ether such as diethylene glycol monoalkyl ether, triethylene glycol monoalkyl ether, tripropylene glycol monoalkyl ether, and polyoxypropylene glyceryl ether; and 2-pyrrolidone and N-methyl-2-pyrrolidone.
From the viewpoint of jetting stability, it is preferable that the water-soluble organic solvent which can be used in the production of the ink includes at least one selected from the group consisting of alkylene glycol and alkylene glycol monoalkyl ether.
A content of the water-soluble organic solvent in the ink to be produced is preferably 10% by mass to 40% by mass and more preferably 15% by mass to 30% by mass with respect to the total amount of the ink.
The content of the water-soluble organic solvent herein is the total amount of the amount contained in the pigment dispersion and the amount added in the stage of producing the ink.

Resin

In the step of producing the ink, at least one resin may be added in addition to the above-described components.
The resin can contribute to film-forming properties of the ink (that is, formability of the ink film).
A weight-average molecular weight (Mw) of the resin is preferably 1,000 to 300,000, more preferably 2,000 to 200,000, and still more preferably 5,000 to 100,000.
In the present disclosure, the weight-average molecular weight (Mw) means a value measured according to gel permeation chromatography (GPC), unless otherwise specified.
For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID × 15 cm, manufactured by Tosoh Corporation) are used as a column, and tetrahydrofuran (THF) is used as an eluent. In addition, as the measurement conditions, a sample concentration of 0.45% by mass, a flow rate of 0.35 ml/min, a sample injection amount of 10 μl, and a measurement temperature of 40°C are set, and a RI detector is used.
The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".
As the resin, resin particles are preferable.
A resin constituting the resin particles is preferably a water-insoluble resin. The "water-insoluble" in the water-insoluble resin means a property that an amount dissolved in 100 g of distilled water at 25°C is less than 2 g.
A volume average particle diameter of the resin particles is preferably 1 nm to 300 nm, more preferably 3 nm to 200 nm, and still more preferably 5 nm to 150 nm.
In the present disclosure, the volume average particle diameter means a value measured using a laser diffraction/scattering type particle size distribution analyzer.
As the measuring device, a particle size distribution measuring device "MICROTRAC MT-3300II" (manufactured by Nikkiso Co., Ltd.) is exemplified.
It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.
In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).
From the viewpoint of further improving rub resistance of the image, a glass transition temperature (Tg) of the resin particles is preferably 50°C to 250°C and more preferably 50°C to 150°C.
Here, a measurement Tg obtained by actual measurement is employed as the glass transition temperature (Tg) of the resin particles. A method of measuring the measurement Tg can refer to paragraph 0111 of JP2015-25076A.
For the resin particles, for example, descriptions described in paragraphs 0038 to 0114 of WO2021/192720A and paragraphs 0109 to 0120 of JP2015-25076A may be referred to.

In a case where the ink contains the resin particles, a content of the resin particles in the ink is preferably 1% by mass to 20% by mass, more preferably 2% by mass to 15% by mass, and still more preferably 2% by mass to 10% by mass with respect to the total amount of the ink.

Additive

In the step of producing the ink, at least one additive may be added in addition to the above-described components.
Examples of the additive include a surfactant, a water-soluble resin, a co-sensitizer, an ultraviolet absorbing agent, an antioxidant, a fading inhibitor, a conductive salt, and a basic compound.

Physical Properties

From the viewpoint of improving the jetting stability, a pH (25°C) of the ink to be produced is preferably 7 to 10 and more preferably 7.5 to 9.5.
The pH of the ink is measured at 25°C using a pH meter, for example, a pH meter (product name "WM-50EG") manufactured by DKK-TOA CORPORATION.
A viscosity (25°C) of the ink to be produced is preferably 0.5 mPa·s to 30 mPa·s, more preferably 2 mPa·s to 20 mPa·s, still more preferably 2 mPa·s to 15 mPa·s, and even more preferably 3 mPa·s to 10 mPa·s.
The viscosity of the ink is measured at 25°C using a viscometer, for example, a TV-22 type viscometer manufactured by Toki Sangyo Co., Ltd.
A surface tension of the ink to be produced is preferably 60 mN/m or less, more preferably 20 mN/m to 50 mN/m, and still more preferably 25 mN/m to 40 mN/m.
The surface tension of the ink is measured at 25°C using a surface tension meter, for example, by a plate method using an automatic surface tension meter (trade name, "CBVP-Z") manufactured by Kyowa Interface Science Co., Ltd.

Image recording method

The image recording method according to the present disclosure includes a step of producing an ink by the method for producing an ink according to the present disclosure, and an ink applying step of applying the ink onto a substrate by an ink jet method.
Since the ink produced by the method for producing an ink according to the present disclosure has excellent jetting stability over time, in the image recording method according to the present disclosure, an image in which bleeding is suppressed can be recorded.

Step of Producing Ink

The step of producing the ink can refer to the method for producing an ink according to the present disclosure described above.

Ink Applying Step

The ink applying step is a step of applying the above-described ink onto a substrate by an ink jet method.

Substrate

As the substrate, a permeable substrate such as paper, a non-permeable substrate such as a resin substrate (details thereof will be described later), and the like can be used without particular limitation.
In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.
Examples of a material of the non-permeable substrate include glass, a metal (such as aluminum, zinc, and copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, and an acrylic resin).
It is preferable that the material of the non-permeable substrate is a resin. That is, it is preferable that the non-permeable substrate is a resin substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or non-woven fabric formed of impermeable fibers, in addition to the sheet-like (film-like) or plate-like non-permeable substrate.

The non-permeable substrate may be subjected to a hydrophilization treatment. Examples of the hydrophilization treatment include a corona treatment, a plasma treatment, a flame treatment, a heat treatment, an abrasion treatment, and a light irradiation treatment (such as an UV treatment), but the hydrophilization treatment is not limited thereto. The corona treatment can be performed, for example, using CORONA MASTER (product name "PS-10S", manufactured by Shinko Electric & Instrumentation Co., Ltd.). Conditions for the corona treatment may be appropriately selected according to the type and the like of the non-permeable substrate.

The non-permeable substrate may be a non-permeable substrate having transparency.

Here, the expression of "having transparency" denotes that a transmittance in visible light having a wavelength of 400 nm to 700 nm is 80% or more (preferably 90% or more).

In a case where the non-permeable substrate is a non-permeable substrate having transparency, the image is easily visually recognized through the non-permeable substrate from an image non-recorded surface side of the non-permeable substrate.

For example, with the non-permeable substrate having transparency, in a case where a pretreatment liquid described later, a non-white ink, and a white ink are applied onto the non-permeable substrate in this order to record an image, a non-white image (for example, a pattern image such as a character and a figure) with a white image (for example, a solid image) as a background is easily visually recognized through the non-permeable substrate from the image non-recorded surface side of the non-permeable substrate.

Ink Jet Method

The ejection method of the ink by the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet method, particularly, it is possible to effectively use the method described in JP1979-59936A (JP-S54-59936A), which is an ink jet method of causing an ink to experience a rapid volume change by the action of thermal energy and jetting the ink from a nozzle by using the acting force resulting from the change of state. As the ink jet method, a method described in paragraphs 0093 to 0105 of JP2003-306623A can also be applied.

The application of the ink onto the substrate by the inkjet method can be performed by allowing the ink to be jetted from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

However, the method of the ink jet head in the image recording method according to the present disclosure is not limited to the line method, and may be a shuttle method. In any method applied, the effect of the image recording method according to the present disclosure is exhibited.

The ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining a high-definition image, the amount of liquid droplets of the ink jetted from nozzles of the ink jet head is preferably 1 picoliter (pL) to 10 pL and more preferably 1.5 pL to 6 pL.

The ink applying step may include heating and drying the ink applied onto the substrate, or may not include heating and drying the ink.

In a case where the ink is heated and dried, a method for heating and drying the ink is not particularly limited, and examples thereof include infrared (IR) drying, hot air drying (for example, a dryer and the like), and heating and drying with a heating device (for example, a heater, a hot plate, a heating furnace, and the like).

The method of heating and drying may be a method of combining two or more of the above-described methods.

The heating and drying can be carried out by heating the ink from at least one of the image-recorded surface side or the image non-recorded surface side of the substrate.

In a case where the ink is heated and dried, a heating temperature in the heating and drying of the ink is preferably 35°C or higher, more preferably 40°C or higher, still more preferably 50°C or higher, and even more preferably 60°C or higher.

The upper limit value of the heating temperature is not particularly limited, but is preferably 100°C and more preferably 90°C.

In a case where the ink is heated and dried, a heating time in the heating and drying of the ink is not particularly limited, but is preferably 1 second to 180 seconds, more preferably 1 second to 120 seconds, and still more preferably 1 second to 60 seconds.

In the ink applying step, two or more kinds of inks (for example, two or more colors of inks) may be applied onto the substrate.

In a case where two or more kinds of inks are applied onto the substrate, it is sufficient that at least one of the two or more kinds of inks is the ink produced by the method for producing an ink according to the present disclosure.

In a case where two or more kinds of inks are applied onto the substrate, the two or more kinds of inks may be applied in an overlapping manner.

By applying two or more kinds of inks onto the substrate in an overlapping manner, a multicolor image is recorded.

Since the ink produced by the method for producing an ink according to the present disclosure has excellent jetting stability over time, bleeding (hereinafter, also referred to as multicolor bleeding) is suppressed in the recorded multicolor image.

Hereinafter, in a case where two or more kinds of inks are applied onto the substrate, an ink to be applied onto the substrate for the first time may be referred to as a first ink, and an ink to be applied onto the substrate for the n-th time may be referred to as an n-th ink (here, n is an integer of 2 or more).

Step of Applying Pretreatment Liquid

Examples of an embodiment of the image recording method according to the present disclosure include an embodiment in which a step of applying a pretreatment liquid containing water and a coagulating agent onto the non-permeable substrate is further provided before the ink applying step.

In this case, the ink applying step is performed by applying the ink onto a region of the non-permeable substrate, onto which the pretreatment liquid has been applied.

Pretreatment Liquid

Water

The pretreatment liquid contains water.

A content of water is preferably 50% by mass or more and more preferably 60% by mass or more with respect to the total amount of the pretreatment liquid.

The upper limit of the content of water depends on the amount of other components, but is preferably 90% by mass or less and more preferably 80% by mass or less with respect to the total amount of the pretreatment liquid.

Coagulating Agent

The pretreatment liquid contains at least one coagulating agent.

The coagulating agent in the pretreatment liquid coagulates the components in the ink on the non-permeable substrate. As a result, image quality of the image can be improved.

The coagulating agent is preferably at least one selected from the group consisting of an organic acid and a polyvalent metal compound.

Preferred examples of the coagulating agent also include coagulating agents described in paragraphs 0122 to

0130 of WO2020/195360A.

Hereinafter, preferred aspects of each of the organic acid, the polyvalent metal compound, the metal complex, and the cationic polymer, which can be used as the coagulating agent, will be described.

## Organic Acid

Examples of the organic acid include an organic compound having an acidic group.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the coagulating rate of the ink, as the acidic group, a phosphoric acid group or a carboxy group is preferable, and a carboxy group is more preferable.

It is preferable that at least a part of the acidic group is dissociated in the pretreatment liquid.

Examples of the organic acid include, as an organic compound having a carboxy group, (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of coagulating rate of the ink, as the organic compound having a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.

It is preferable that the organic acid has a low pKa (for example, 1.0 to 5.0). As a result, surface charge of particles, for example, the pigment stably dispersed in the ink by a weakly acidic functional group such as a carboxy group, resin particles, and the like can be reduced by bringing the ink into contact with the organic acid having a lower pKa to degrade dispersion stability.

It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

## Polyvalent Metal Compound

Examples of the polyvalent metal compound include a polyvalent metal salt.

Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, lactic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

It is preferable that at least a part of the polyvalent metal compound is dissociated into polyvalent metal ions and counter-ions in the pretreatment liquid.

A content of the coagulating agent in the pretreatment liquid is preferably 0.1% by mass to 40% by mass, more preferably 0.1% by mass to 30% by mass, still more preferably 1% by mass to 20% by mass, and even more preferably 1% by mass to 10% by mass with respect to the total amount of the pretreatment liquid.

## Resin

The pretreatment liquid contains at least one resin.

The resin in the pretreatment liquid contributes to film-forming properties of the pretreatment liquid (that is, formability of the pretreatment liquid film).

As the resin in the pretreatment liquid, the same resin as the resin in the ink (for example, the resin particles) can be used.
A content of the resin in the pretreatment liquid is not particularly limited.
The content of the resin is preferably 0.5% by mass to 30% by mass, more preferably 1% by mass to 20% by mass, and particularly preferably 1% by mass to 15% by mass with respect to the total amount of the pretreatment liquid.

Water-Soluble Organic Solvent

The pretreatment liquid may contain at least one water-soluble organic solvent.
As the water-soluble organic solvent in the pretreatment liquid, the same water-soluble organic solvent as the water-soluble organic solvent which can be contained in the ink can be used.

Additive

The pretreatment liquid may contain an additive such as a surfactant, a water-soluble resin, a co-sensitizer, an ultraviolet absorbing agent, an antioxidant, a fading inhibitor, a conductive salt, and a basic compound, as necessary.

Physical Properties

A pH (25°C) of the pretreatment liquid is preferably 2.0 to 7.0 and more preferably 2.0 to 4.0. The pH of the pretreatment liquid is measured by the same method as in the pH of the ink.
From the viewpoint of coating properties of the pretreatment liquid, a viscosity of the pretreatment liquid is preferably 0.5 mPa·s to 10 mPa·s and more preferably 1 mPa·s to 5 mPa·s. The viscosity is a value measured at 25°C using a viscometer. The viscosity of the pretreatment liquid is measured by the same method as in the viscosity of the ink.
A surface tension of the pretreatment liquid is preferably 60 mN/m or less, more preferably 20 mN/m to 50 mN/m, and still more preferably 30 mN/m to 45 mN/m. The surface tension is a value measured at a temperature of 25°C. The surface tension of the pretreatment liquid is measured by the same method as in the surface tension of the ink.

Method of Applying Pretreatment Liquid

A method of applying the pretreatment liquid is not particularly limited, and examples thereof include known methods such as a coating method, a dipping method, and an ink jet recording method.
Examples of the coating method include known methods using a bar coater, an extrusion die coater, an air doctor coater, a blade coater, a rod coater, a knife coater, a squeeze coater, a reverse roll coater, or the like.
It is preferable that the pretreatment liquid is applied by a coating method.
The image recording method according to the present disclosure may include a step of drying the pretreatment liquid applied onto the substrate after the pretreatment liquid applying step.
The step of applying the pretreatment liquid may include drying the pretreatment liquid applied onto the non-permeable substrate.
A method of drying the pretreatment liquid is not particularly limited, but for example, the same method as the method exemplified in the method of drying the ink, which will be described later, can be applied.
A preferred range of drying conditions (for example, the heating temperature and the heating time) of the pretreatment liquid is the same as a preferred range of drying conditions of the ink, which will be described later.

One Example of Image Recording Apparatus

Fig. 1 is a diagram conceptually showing one example of the image recording apparatus used in the image recording method according to the present disclosure.
As shown in Fig. 1, one embodiment of the image recording apparatus is an example of an ink jet recording device including a transport mechanism which transports a resin substrate by a roll-to-roll method; and is a device that unwinds a non-permeable substrate A1 having a long film shape wound in a roll shape by a unwinding device R1, transports the unwound non-permeable substrate A1 in a direction indicated by a block arrow, passes the unwound non-permeable substrate A1 through a pretreatment liquid applying device P1, a pretreatment liquid drying zone DP1, a first ink jet head IJ1, a first drying zone D1, a second ink jet head IJ2, and a second drying zone D2 in this order, and finally winds the non-permeable substrate A1 by a winding device R2 including a winding core with a tension P.
The non-permeable substrate A1 is transported in a state in which a tension is applied, and is wound in a state in which the tension P is applied. The tension during the transport may be the same tension as the tension P during the winding, or may be a tension different from the tension P. In addition, the tension may vary depending on the position in the

transport direction, or may be uniform.

The image recording apparatus according to one embodiment may include a tension adjusting unit for adjusting the tension of the non-permeable substrate.

Examples of the tension adjusting unit include a powder brake provided in the unwinding device R1 and/or the winding device R2, a dancer roll provided in the middle of the transport path, and a control device (for example, a tension controller) that controls each tension by adjusting each condition of the image recording apparatus.

In addition, the image recording apparatus according to one embodiment may include a tension measuring unit (for example, a tension meter) for measuring the tension of the non-permeable substrate.

Since Fig. 1 is a conceptual diagram, the transport path of the non-permeable substrate A1 is simplified, and the non-permeable substrate A1 is shown as being transported in one direction. However, in reality, the transport path of the non-permeable substrate A1 may be meandering.

The method of transporting the non-permeable substrate A1 can be appropriately selected from various web transport methods of using a drum, a roll, and the like.

The pretreatment liquid applying device P1, the pretreatment liquid drying zone DP1, the first ink jet head IJ1, the first drying zone D1, the second ink jet head IJ2, and the second drying zone D2 are arranged in this order on a downstream side of the non-permeable substrate A1 in the transport direction and from an upstream side of the non-permeable substrate A1 in the transport direction with respect to the unwinding device R1 for unwinding the non-permeable substrate A1.

The pretreatment liquid, the first ink, and the second ink are respectively applied by the pretreatment liquid applying device P1, the first ink jet head IJ1, and the second ink jet head IJ2.

In this case, at least one of the heating and drying of the pretreatment liquid in the pretreatment liquid drying zone DP1, the heating and drying of the first ink in the first drying zone D1, or the heating and drying of the second ink in the second drying zone D2 can be carried out.

In the first drying zone D1, the heating and drying of the pretreatment liquid may be substantially carried out in addition to the heating and drying of the first ink.

In the second drying zone D2, the heating and drying of the pretreatment liquid and/or the heating and drying of the first ink may be substantially carried out in addition to the heating and drying of the second ink.

In addition, in a case where the resin substrate passes through each drying zone in a state in which the temperature of each drying zone is set to room temperature, the heating and drying can be omitted.

A surface treatment unit (not shown) for performing a surface treatment (preferably a corona treatment) on at least one of the front surface or the back surface of the non-permeable substrate A1 may be provided on the upstream side of the pretreatment liquid applying device P1.

In addition, a cooling zone for cooling the recorded multicolor image may be provided on the downstream side of the second drying zone D2.

The first ink jet head IJ1 and the second ink jet head IJ2 may be shuttle heads, but from the viewpoint of increasing speed of the image recording, a line head in which a plurality of outlets (nozzles) are arranged on the non-permeable substrate A1 having a long film shape in the width direction is preferable.

Each of the first ink jet head IJ1 and the second ink jet head IJ2 may be used alone or a plurality of kinds thereof.

Examples of a combination of the first ink jet head IJ1 and the second ink jet head IJ2 include a combination in which the first ink jet head IJ1 is formed of four ink jet heads corresponding to four colors of cyan, magenta, yellow, and black (note; these four ink jet heads are arranged in the transport direction of the resin substrate) and the second ink jet head IJ2 is formed of one ink jet head corresponding to white.

Further, other examples of the combination of the first ink jet head IJ1 and the second ink jet head IJ2 include a combination in which the first ink jet head IJ1 is formed of one ink jet head corresponding to white and the second ink jet head IJ2 is formed of four ink jet heads corresponding to four colors of cyan, magenta, yellow, and black (note; these four ink jet heads are arranged in the transport direction of the substrate).

In the ink jet recording using the image recording apparatus according to the embodiment, first, the non-permeable substrate A1 having a long film shape wound in a roll shape is unwound by the unwinding device R1; the unwound non-permeable substrate A1 is transported in a direction of a block arrow in a state in which a tension is applied; the pretreatment liquid is applied onto the transported non-permeable substrate A1 by the pretreatment liquid applying device P1; the pretreatment liquid is dried in the pretreatment liquid drying zone DP1 as necessary; the first ink (that is, any one of the non-white ink or the white ink) is applied by the first ink jet head IJ1; the first ink is dried in the first drying zone D1 as necessary; the second ink (that is, the other of the non-white ink or the white ink) is applied by the second ink jet head IJ2; and the second ink is dried in the second drying zone D2 as necessary. As a result, a multicolor image including a first image (that is, any one of a non-white image or a white image) derived from the first ink and a second image (that is, the other of a non-white image or a white image) derived from the second ink is obtained. Next, the obtained multicolor image is cooled as necessary, and finally, the non-permeable substrate A1 with the multicolor image, in a state in which the tension P is applied, is wound by the winding device R2 including a winding core.

The image recording apparatus according to the embodiment may include other ink jet heads (for example, a third ink jet head for a third ink, a fourth ink jet head for a fourth ink, an ink jet head for a white ink, and the like) on the downstream side of the second ink jet head IJ2 and upstream side of the second drying zone D2, as necessary.

## Examples

Hereinafter, the present disclosure will be described in more detail using Examples. However, the present disclosure is not limited to the following examples as long as it does not exceed the gist of the present invention.

### Examples 1 to 7 and Comparative Examples 1 to 5

#### Preparation Step (Synthesis of Polymer Dispersant N)

Polymer dispersants N of Examples 1 to 6 and Comparative Examples 1 to 3 were synthesized as follows.

153.5 parts by mass of tripropylene glycol monomethyl ether (product name "MFTG", manufactured by NIPPON EMULSIFIER CO., LTD.) as a reaction solvent was charged into a reaction container equipped with a gas introduction pipe, a thermometer, a condenser, and a stirrer, and the inside of the reaction container was replaced with nitrogen gas.

Next, the inside of the reaction container was heated to 85°C, a mixture of MFTG (76.8 parts by mass) as a reaction solvent, raw material monomers having types and mass ratios shown in Table 1 (total of 100 parts by mass), and V-601 (manufactured by FUJIFILM Wako Pure Chemical Corporation) (3.0 parts by mass) as a polymerization initiator was added dropwise thereto over 3 hours to carry out a polymerization reaction, and after the completion of the dropwise addition, the reaction solution was further reacted at 85°C for 3 hours to complete the polymerization, thereby obtaining a solution containing the polymer dispersant N.

Weight-average molecular weights of the obtained polymer dispersant N are shown in Table 1.

A polymer dispersant N of Example 7 was synthesized as follows.

#### First Reaction

As a mixture of monomers, 61 parts by mass of maleic acid anhydride, 87 parts by mass of 1-hexadecene as $\alpha$-olefin, 63 parts by mass of "UNILUBE PKA-5013" as an allylated polyether 1, 100 parts by mass of methyl ethyl ketone (MEK), and 0.5 parts by mass of octyl thioglycolate as a chain transfer agent were charged into a reaction container equipped with a gas introduction pipe, a thermometer, a condenser, a dropping funnel, and a stirrer, and the reaction container was subjected to nitrogen replacement, and heated to 105°C while stirring. A mixture of 2.0 parts by mass of dimethyl 2,2'-azobisisobutyrate (manufactured by FUJIFILM Wako Pure Chemical Corporation, trade name: V-601) as a radical polymerization initiator and 5 parts by mass of MEK was added dropwise thereto over 1 hour. Thereafter, a mixture of V-601 (5 parts by mass) and MEK (12 parts by mass) was added dropwise thereto over 6 hours while stirring at a temperature of 85°C, and the mixture was allowed to react for 1 hour while maintaining the temperature at 85°C to obtain a polymer having a maleic acid anhydride as an acid anhydride group.

#### Second Reaction

Subsequently, 37 parts by mass of isopropyl alcohol and 0.1 parts by mass of diazabicycloundecene as a catalyst were added thereto, the mixture was stirred for 6 hours while maintaining the temperature at 85°C to carry out a reaction, whereby the maleic acid anhydride was subjected to ring-opening to carry out half-esterification. The solvent of the obtained product was distilled off under reduced pressure, and the solution was adjusted with MFTG so that a concentration of solid contents of the dispersant was 35% by mass, thereby obtaining a solution containing the polymer dispersant N.

A weight-average molecular weight of the obtained polymer dispersant N is shown in Table 1.

Details of the raw material monomers shown in Table 1 are as follows.

- MAA ... methacrylic acid
- C18MA ... stearyl methacrylate
- IBOMA ... isobornyl methacrylate
- PDEGA ... phenoxydiethylene glycol acrylate
- MMA ... methyl methacrylate

Allylated polyether 1 ... "UNILUBE (registered trademark) KPA-5013" (manufactured by NOF Corporation; random polymer of polyethylene glycol-polypropylene glycol and allyl ether)

· α-Olefin ... 1-hexadecene (manufactured by Tokyo Chemical Industry Co., Ltd.)

Neutralization Step

The solution containing the polymer dispersant N obtained above was cooled to room temperature, and an NaOH aqueous solution as an aqueous solution of a neutralizing base was added thereto to neutralize 80 mol% of the carboxy group in the polymer dispersant N. In this manner, a solution containing the polymer dispersant A in which the degree of neutralization ND1 was 80% (that is, the polymer dispersant obtained by neutralizing the polymer dispersant N) was obtained.
A concentration of solid contents in the obtained solution was adjusted to 30% by mass, thereby obtaining an MFTG solution (concentration of solid contents: 30% by mass) of the polymer dispersant A.
The NaOH aqueous solution was added according to the degree of neutralization ND1 of each of Examples in Table 1.

An acid value AV1 (mgKOH/g) of the polymer dispersant A is as shown in Table 1.

Since the acid value was related to the total amount of the unneutralized acid group (-COOH group) and the neutralized acid group ($-COO^-$ group), the acid value did not change by the neutralization step. Therefore, the acid value AV1 (mgKOH/g) of the polymer dispersant A was the same as the acid value (mgKOH/g) of the polymer dispersant N.

Dispersion Step

A mixture having the following formulation was pre-dispersed to be uniform, and then subjected to a dispersion treatment for 3 hours using a beads mill (STARMILL manufactured by Ashizawa Finetech Ltd., bead diameter: 0.3 mmφ, zirconia beads). In this manner, an uncrosslinked dispersion A in which the magenta pigment was dispersed by the polymer dispersant A was obtained.

Formulation

· Pigment Red 122 (hereinafter, also referred to as "PR-122") (magenta pigment as a quinacridone pigment)

... 120.0 parts by mass
· MFTG solution of the polymer dispersant A (concentration of solid contents: 30% by mass)
... 120.0 parts by mass
· MFTG
... 6.0 parts by mass
· Water
... 230.0 parts by mass

Acid Addition Step

The uncrosslinked dispersion A was diluted with deionized water so that A pigment concentration was 15% by mass, thereby obtaining a diluted liquid of the uncrosslinked dispersion A.
While stirring the obtained diluted liquid of the uncrosslinked dispersion A (500 parts by mass), a mixture of a 1 mol/L hydrochloric acid aqueous solution (19.4 parts by mass) and ultrapure water (225.2 parts by mass) was added thereto over 5 minutes, thereby reducing a degree of neutralization of the polymer dispersant A in the diluted liquid of the uncrosslinked dispersion A from 80% to 60%; and then stirring was carried out with a magnetic stirrer for 60 minutes. In this manner, an uncrosslinked dispersion B in which the magenta pigment was dispersed by the polymer dispersant B having a degree of neutralization ND2 of 60% (that is, a polymer dispersant obtained by reducing the degree of neutralization of the polymer dispersant A to 60%) was obtained.

Crosslinking Step

Next, a mixture having the following formulation was reacted at 70°C for 6 hours and cooled to 25°C, thereby crosslinking the polymer dispersant B in the uncrosslinked dispersion B with a crosslinking agent to obtain a crosslinked dispersion (that is, a pigment dispersion) containing the polymer dispersant C (that is, the polymer dispersant obtained by crosslinking the polymer dispersant B) and a magenta pigment.

Formulation

· Uncrosslinked dispersion B
... 744.6 parts by mass
"Denacol EX-321" (manufactured by Nagase ChemteX Corporation, trimethylolpropane polyglycidyl ether; crosslinking agent)
... 5.4 parts by mass

An acid value AV2 (mgKOH/g) of the polymer dispersant C is as shown in Table 1.

In the crosslinking step, a crosslinking structure was formed in the polymer compound by a reaction between at least one of the unneutralized acid group (-COOH group) or the neutralized acid group ($-COO^-$ group) in the polymer dispersant and an epoxy group (specifically, an epoxy group in the structure of a glycidyl group) in the crosslinking agent.

In this manner, in the crosslinking step, at least one of the unneutralized acid group or the neutralized acid group was consumed for the formation of the crosslinking, and thus the acid value of the polymer dispersant was reduced by the crosslinking step.

Therefore, in principle, the acid value AV2 (mgKOH/g) of the polymer dispersant C was a value lower than the acid value AV1 (mgKOH/g) of the polymer dispersant A.

Centrifugal Treatment and Filtration of Pigment Dispersion

The crosslinked dispersion (that is, the pigment dispersion) obtained above was subjected to centrifugal treatment with a centrifuge at 7,000 G for 20 minutes to remove coarse particles.

Next, the crosslinked dispersion subjected to the centrifugal treatment was filtered through a LABO-PURE filter (0.5 μm) manufactured by Roki Co., Ltd. to further remove the coarse particles.

Next, the crosslinked dispersion after the filtration was subjected to ultrafiltration by being allowed to flow through an ultrafiltration device (crossflow-type ultrafilter (UF), manufactured by Sartorius AG) equipped with a polyether sulfone (PESU) membrane (size of micropores: 0.1 μm) at a flow rate of 600 mL per minute. At this time, the liquid temperature was adjusted to 25°C, and the ultrafiltration was performed 10 times by setting 1 time of the volume magnification of the charged liquid as 1 time.

Thereafter, deionized water was added so that the concentration of the magenta pigment was 15% by mass, thereby obtaining a pigment dispersion 1 (magenta pigment concentration: 15% by mass) used in preparation of the following ink.

Preparation of First Ink

A mixture having the following formulation was stirred with a magnetic stirrer for 60 minutes and filtered through a LABO-PURE filter (0.5 μm) manufactured by Roki Co., Ltd., thereby obtaining a magenta ink as a first ink.

Formulation of First Ink

· Pigment dispersion 1
... 5.5% by mass in terms of content of magenta pigment
· Propylene glycol monomethyl ether (PGmME) [water-soluble organic solvent]
... 3% by mass
· Propylene glycol (PG) [water-soluble organic solvent]
... 20% by mass
· NeoCryl A-1105 (acrylic resin particle dispersion liquid) (manufactured by DSM)
... 3.4% by mass in terms of content of resin particles
· OLFINE E1010 (acetylene glycol-based surfactant manufactured by Nissin Chemical Co., Ltd.)
... 1.0% by mass
· BYK-3450 (silicone-based surfactant manufactured by BYK Chemie)
... 1.0% by mass
· PVPK15 (polyvinylpyrrolidone K15)
... 0.15% by mass

· ST-XS (colloidal silica dispersion liquid) (manufactured by Nissan Chemical Corporation)
... 0.05% by mass in terms of content of colloidal silica particles
· Water
... remaining amount such that total amount of ink reached 100% by mass

Preparation of Second Ink

A second ink was prepared in the same manner as in the preparation of the first ink, except that the type of the pigment was changed to a cyan pigment (Pigment Blue 15:3).

Preparation of Pretreatment Liquid

The following components were mixed to prepare a pretreatment liquid having the following formulation.

Formulation of Pretreatment Liquid

· Calcium acetate [coagulating agent]
... 0.2% by mass
· Calcium formate [coagulating agent]
... 1.7% by mass
· Calcium lactate [coagulating agent]
... 2.2% by mass
· Propylene glycol [solvent]
... 2.0% by mass
· OLFINE E1010 (manufactured by Nissin Chemical Co., Ltd.) [surfactant]
... 0.5% by mass
· SUPERFLEX 500M (manufactured by DKS Co., Ltd.) [water dispersion of urethane resin particles]
... 9.3% by mass
· Ultrapure water
... remaining amount such that total amount of pretreatment liquid reached 100% by mass

Preparation of Image Recording Apparatus

As an image recording apparatus used for evaluation, the image recording apparatus shown in Fig. 1 was prepared.
A gravure coater was used as the pretreatment liquid applying device P1.
A drying method in the pretreatment liquid drying zone DP1 was drying with hot air.
An ink jet head for jetting the first ink was disposed as the first ink jet head IJ1, and an ink jet head for jetting the second ink was disposed as the second ink jet head IJ2.
The first drying zone D1 was allowed to pass through without stopping.
A drying method in the second drying zone D2 was drying with hot air.
An air cooling zone (not shown) was provided between the second drying zone D2 and the winding device R2.
As the first ink jet head IJ1 and the second ink jet head IJ2, a 1200 dpi (dot per inch; 1 inch is 2.54 cm)/20 inch-width piezo full line head (total number of nozzles: 2048) was used.
Driving frequencies of the first ink jet head IJ1 and the second ink jet head IJ2 were both set to 30 kHz.

Image Recording

Image recording was performed using the above-described image recording apparatus.
The pretreatment liquid, the first ink, and the second ink described above were loaded into the image recording apparatus.
As a non-permeable substrate, an OPP film (product name "PYLEN film-OT", manufactured by Toyobo Co., Ltd., thickness: 25 $\mu$m) was used.
First, the non-permeable substrate was unwound by the unwinding device R1, and the unwound non-permeable substrate was transported in a state in which a tension was applied. The non-permeable substrate being transported was coated with the pretreatment liquid by the gravure coater as the pretreatment liquid applying device P1.

Next, the pretreatment liquid was dried in the pretreatment liquid drying zone DP1.

Next, the first ink was applied in a solid image shape onto the region of the non-permeable substrate, onto which the pretreatment liquid had been applied, by the first ink jet head IJ1, and then passed through the first drying zone D1 without stopping.

Next, the second ink was applied in a solid image shape onto the region of the non-permeable substrate, onto which the pretreatment liquid and the first ink had been applied, by the second ink jet head IJ2.

Next, the second ink was dried in the second drying zone D2.

By the above-described operation, a multicolor image (solid image) having a structure in which a solid image derived from the second ink was overlapped on a solid image derived from the first ink was recorded on the non-permeable substrate having a length of 100 m, and an image recorded material was obtained.

Next, the obtained image recorded material was air-cooled, and then wound by the winding device R2 including a winding core to obtain a roll of the image recorded material.

An application amount of the pretreatment liquid was 1.7 g/$m^2$.

The pretreatment liquid was dried under conditions of 40°C and 3 seconds.

The second ink was dried under conditions of 70°C and 20 seconds.

Evaluation

The first ink and the second ink obtained above were evaluated as follows.

The results are shown in Table 1.

Jetting Stability of Ink Over Time

As the first ink and the second ink, inks obtained by heating the inks at 80°C for one day after the preparation were used, and a roll of an image recorded material was obtained by the above-described image recording.

The obtained roll of the image recorded material was unwound, and the image for one head at a position of 100 m was visually observed, and the number of streaks generated in the solid image of the image recorded material along the transport direction of the non-permeable substrate was confirmed.

Based on the results of the confirmation, jetting stability of the ink over time was evaluated according to the following evaluation standard.

In the following evaluation standard, the rank of the most excellent jetting stability of the ink over time is A.

Evaluation Standard for Jetting Stability of Ink Over Time

A: number of streaks was 0 or more and less than 10.
B: number of streaks was 10 or more and less than 20.
C: number of streaks was 20 or more and less than 30.
D: number of streaks was 30 or more.

Evaluation of Multicolor Bleeding

A multicolor image having a structure in which a character image was recorded on a solid image formed of the first ink was recorded under the same conditions as those of the image recording described above, except that the second ink was jetted in the form of the character image. The character image formed of the second ink was a character image shown in Fig. 2. The character image was recorded in sizes of 6 pt, 8 pt, 10 pt, and 12 pt.

The character image in the obtained multicolor image was visually observed, and bleeding of the image was evaluated according to the following evaluation standard.

Evaluation Standard for Multicolor Bleeding

A: there was no collapse of the character image in all sizes of 6 pt, 8 pt, 10 pt, and 12 pt.
B: there was no collapse of the character image at sizes of 8 pt, 10 pt, and 12 pt, but there was collapse at a size of 6 pt.
C: there was no collapse of the character image at sizes of 10 pt and 12 pt, but there was collapse at sizes of 6 pt and 8 pt.

D: there was no collapse of the character image at a size of 12 pt, but there was collapse at sizes of 6 pt, 8 pt, and 10 pt; or the character image was crushed in all sizes of 6 pt, 8 pt, 10 pt, and 12 pt.

Table 1

| | | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|---|---|
| Dispersant N | Raw material monomer (port by mass) | MAA (structural unit A) | 37 | 37 | 37 | 43.7 | 37 | 30.2 | | 37 | 37 | 37 | 37 | 37 |
| | | C18MA (structural unit L) | 36.5 | 36.5 | 36.5 | 39.8 | 26.5 | 23.3 | | 36.5 | 36.5 | 36.5 | 36.5 | 9 |
| | | IBOMA | | | | | 32.5 | | | | | | | |
| | | PDEGA | 24 | 24 | 24 | 14 | 4 | 44 | | 24 | 24 | 24 | 24 | 24 |
| | | MMA | 2.5 | 2.5 | 2.5 | 2.5 | | 2.5 | | 2.5 | 2.5 | 2.5 | 2.5 | 30 |
| | | Maleic acid mhydride IPA half-esterified product (structural unit A) | | | | | | | 29 | | | | | |
| | | Allylated polyether 1 | | | | | | | 30 | | | | | |
| | | 1-Hexadecene (structural unit L) | | | | | | | 41 | | | | | |
| | weight-avenge molecular weight (Mw) | | 32,600 | 32,600 | 32,600 | 31,700 | 34,800 | 29,500 | 29,300 | 32,600 | 32,600 | 32,600 | 32,600 | 30,500 |
| | A/L ratio | | 1.0 | 1.0 | 1.0 | 1.1 | 1.4 | 1.3 | 0.7 | 1.0 | 1.0 | 1.0 | 1.0 | 4.1 |
| Dispersant A (degree of neutralization) | AV1 | Acid value mgKOH/g) | 241 | 241 | 241 | 284 | 241 | 196 | 125 | 241 | 241 | 241 | 241 | 241 |
| | ND1 | Degree of neutralization (%) | 80 | 80 | 60 | 60 | 60 | 60 | 90 | 80 | 100 | 100 | 90 | 80 |
| Dispersant B (degree of neutralization) | ND2 | Degree of neutralization (%) | 60 | 50 | 40 | 40 | 40 | 40 | 70 | 75 | 60 | 100 | 60 | 60 |
| Dispersant C (after crosslinking) | AV2 | Acid value (mgKOH/g) | 169 | 169 | 169 | 199 | 168 | 137 | 106 | 179 | 179 | 179 | 210 | 172 |

(continued)

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 |
|---|---|---|---|---|---|---|---|---|---|---|---|---|---|
| Inequality (1) | 0.01 × AV1 × (ND1 - ND2)/(AV1 - AV2)[= Value (1)] | 0.67 | 1.00 | 0.67 | 0.67 | 0.67 | 0.67 | 1.32 | 0.19 | 1.54 | 0.00 | 2.31 | 0.70 |
| | 0.60 ≤ Value (1) | Y | Y | Y | Y | Y | Y | Y | N | Y | N | Y | Y |
| | Value (1) ≤ 2.00 | Y | Y | Y | Y | Y | Y | Y | Y | Y | Y | N | Y |
| Inequality (2) | (100 - ND1)/(ND1 - ND2) [-Value (2)] | 1.00 | 0.67 | 2.00 | 2.00 | 2.00 | 2.00 | 0.50 | 4.00 | 0 | - | 0.33 | 1.00 |
| | 0.30 ≤ Value (2) | Y | Y | Y | Y | Y | Y | Y | Y | N | - | Y | Y |
| | Value (2) ≤ 5.00 | Y | Y | Y | Y | Y | Y | Y | Y | Y | - | Y | Y |
| Inequality (3) | AV2 × 1.2 [= Value (3)] | 203 | 203 | 203 | 238 | 202 | 165 | 127 | 214 | 214 | 214 | 252 | 206 |
| | 120 ≤ Value (3) | Y | Y | Y | Y | Y | Y | Y | Y | Y | Y | Y | Y |
| | Value (3) ≤ 330 | Y | Y | Y | Y | Y | Y | Y | Y | Y | Y | N | Y |
| | AV1 ≤ 330 | Y | Y | Y | Y | Y | Y | Y | Y | Y | Y | Y | Y |
| Evaluation result | Jetting stability of ink over time | A | A | A | A | A | B | B | C | D | D | D | D |
| | Multicolor bleeding | A | A | A | A | A | A | A | D | C | D | C | C |

As shown in Table 1, in each of Examples corresponding to the method of producing a pigment dispersion, the method of producing an ink, and the image recording method according to the present disclosure, the jetting stability of the ink over time was excellent, and bleeding in the multicolor image (that is, multicolor bleeding) was suppressed, as compared with each of Comparative Examples.

Here, each of Examples was an example in which a pigment dispersion was produced by dispersing a pigment using the polymer dispersant A in which the degree of neutralization ND1 was less than 100% and the acid value was AV1, reducing the degree of neutralization of the polymer dispersant A in the uncrosslinked dispersion by adding an acid to obtain the polymer dispersant B having a degree of neutralization of ND2, and then crosslinking the polymer dispersant B in the uncrosslinked dispersion to obtain the polymer dispersant C having the acid value AV2, and the following inequalities (1) and (2) are satisfied.

$$0.60 \leq \text{Value (1)} \leq 2.00 \ldots \text{Inequality (1)}$$

$$0.30 \leq \text{value (2)} \leq 5.00 \ldots \text{Inequality (2)}$$

The polymer dispersant A was a polymer dispersant obtained by neutralizing a part of the acid group contained in the polymer dispersant N.

The polymer dispersant N was a polymer dispersant which had the structural unit L derived from at least one selected from the group consisting of a (meth)acrylic acid alkyl ester containing an alkyl group having 10 or more carbon atoms and an $\alpha$-olefin containing an alkyl group having 10 or more carbon atoms, and had the structural unit A containing an acid group, in which the proportion of the structural unit L was 20% by mass or more.

On the other hand, Comparative Example 1 was an example in which the "0.60 ≤ Value (1)" in the inequality (1) was not satisfied.

Each of Comparative Examples 2 and 3 was an example in which the value (2) was 0, that is, an example in which the degree of neutralization ND1 was set to 100% by neutralizing all the acid groups contained in the polymer dispersant N.

Among these, Comparative Example 3 was an example in which the acid for lowering the degree of neutralization was not added (Degree of neutralization ND1 = Degree of neutralization ND2 = 100%).

In Comparative Example 2, the "0.30 ≤ Value (2)" in the inequality (2) was not satisfied.

In Comparative Example 3, the "0.60 ≤ Value (1)" in the inequality (1) was not satisfied. For the inequality (2), since the value (2) was "0/0":, it cannot be said that the inequality (2) was satisfied or not satisfied.

Comparative Example 4 was an example in which the "Value (1) ≤ 2.00" in the inequality (1) was not satisfied.

Comparative Example 5 was an example in which the proportion of the constitutional unit L in the polymer dispersant N was less than 20% by mass.

## Claims

**1.** A method for producing a pigment dispersion, comprising:

a preparation step of preparing a polymer dispersant N which has a structural unit L derived from at least one selected from the group consisting of a (meth)acrylic acid alkyl ester containing an alkyl group having 10 or more carbon atoms and an $\alpha$-olefin containing an alkyl group having 10 or more carbon atoms, and has a structural unit A containing an acid group, in which a proportion of the structural unit L is 20% by mass or more;
a neutralization step of neutralizing a part of the acid group contained in the polymer dispersant N to obtain a polymer dispersant A having a degree of neutralization of less than 100%;
a dispersion step of dispersing a pigment in an aqueous medium by the polymer dispersant A to obtain an uncrosslinked dispersion;
an acid addition step of adding an acid to the uncrosslinked dispersion to reduce the degree of neutralization of the polymer dispersant A in the uncrosslinked dispersion for obtaining a polymer dispersant B; and
a crosslinking step of crosslinking the polymer dispersant B in the uncrosslinked dispersion after the acid addition step to obtain a polymer dispersant C,
wherein AV1 which is an acid value of the polymer dispersant A in terms of mgKOH/g, AV2 which is an acid value of the polymer dispersant C in terms of mgKOH/g, ND1 which is the degree of neutralization of the polymer dispersant A in terms of %, and ND2 which is a degree of neutralization of the polymer dispersant B in terms of % satisfy the following inequality (1) and inequality (2),

$$0.60 \leq 0.01 \times AV1 \times (ND1 - ND2)/(AV1 - AV2) \leq 2.00 \text{ ... inequality (1),}$$

$$0.30 \leq (100 - ND1)/(ND1 - ND2) \leq 5.00 \text{ ... inequality (2).}$$

**2.** The method for producing a pigment dispersion according to claim 1,
wherein AV1 and AV2 satisfy the following inequality (3),

$$120 \leq (1.2 \times AV2) \leq AV1 \leq 330 \text{ ... inequality (3).}$$

**3.** The method for producing a pigment dispersion according to claim 1 or 2,
wherein, in the polymer dispersant N prepared in the preparation step, an A/L ratio which is a mass ratio of the structural unit A to the structural unit L is 0.5 to 2.0.

**4.** The method for producing a pigment dispersion according to any one of claims 1 to 3, wherein the structural unit A is a structural unit derived from (meth)acrylic acid.

**5.** A method for producing an ink jet ink, comprising:

a step of producing a pigment dispersion by the method for producing a pigment dispersion according to any one of claims 1 to 4; and
a step of producing an ink jet ink using the pigment dispersion.

**6.** An image recording method comprising:

a step of producing an ink jet ink by the method for producing an ink jet ink according to claim 5; and
an ink applying step of applying the ink jet ink onto a substrate by an ink jet method.

**7.** The image recording method according to claim 6,

wherein the substrate is a non-permeable substrate,
the image recording method further includes a step of applying a pretreatment liquid containing water and a coagulating agent onto the non-permeable substrate before the ink applying step, and
in the ink applying step, the ink jet ink is applied onto a region of the non-permeable substrate, onto which the pretreatment liquid has been applied.

FIG. 1

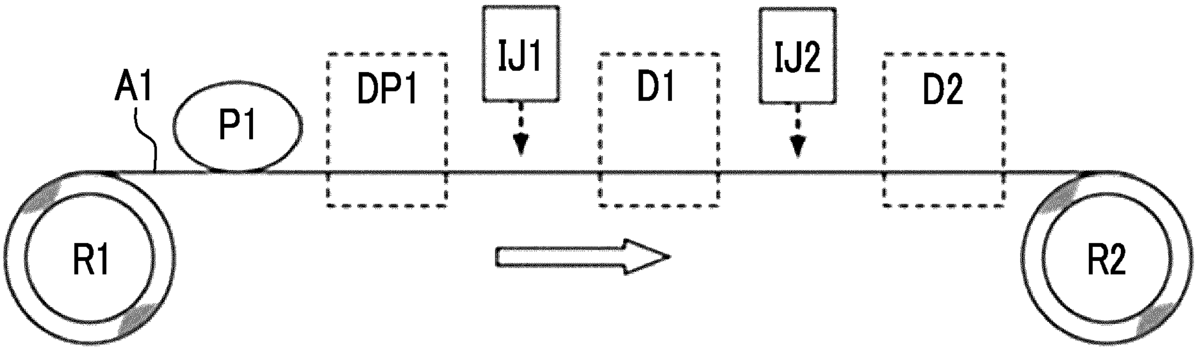


FIG. 2

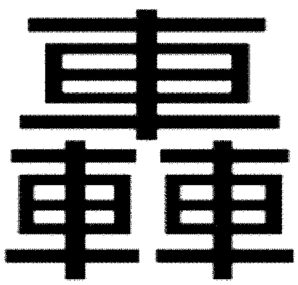

Europäisches Patentamt
European Patent Office
Office européen des brevets

# EUROPEAN SEARCH REPORT

Application Number
EP 25 16 4830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 421 556 A1 (SAKATA INX CORP [JP]) 2 January 2019 (2019-01-02) * claims; examples; tables * ----- | 1-7 | INV. C09D11/322 C08F220/06 C09D11/326 |
| A | EP 3 650 510 A1 (KAO CORP [JP]) 13 May 2020 (2020-05-13) * claims; examples; table 1 * ----- | 1-7 | |

TECHNICAL FIELDS SEARCHED (IPC)
C09D
C08F

The present search report has been drawn up for all claims

1

| Place of search | Date of completion of the search | Examiner |
|---|---|---|
| Munich | 9 July 2025 | Zeslawski, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 16 4830

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | Publication date |
|---|---|---|---|
| EP 3421556 A1 | 02-01-2019 | AU 2017223924 A1 | 11-10-2018 |
| | | CA 3015745 A1 | 31-08-2017 |
| | | CN 108699370 A | 23-10-2018 |
| | | EP 3421556 A1 | 02-01-2019 |
| | | ES 2902466 T3 | 28-03-2022 |
| | | JP 6676410 B2 | 08-04-2020 |
| | | JP 2017149906 A | 31-08-2017 |
| | | KR 20180110674 A | 10-10-2018 |
| | | US 2019161633 A1 | 30-05-2019 |
| | | WO 2017145882 A1 | 31-08-2017 |
| EP 3650510 A1 | 13-05-2020 | CN 110832042 A | 21-02-2020 |
| | | EP 3650510 A1 | 13-05-2020 |
| | | ES 2915829 T3 | 27-06-2022 |
| | | JP 6452881 B1 | 16-01-2019 |
| | | JP 2019014879 A | 31-01-2019 |
| | | US 2020216580 A1 | 09-07-2020 |
| | | WO 2019009170 A1 | 10-01-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019014879 A
- JP 2002012607 A
- JP 2002188025 A
- JP 2003026978 A
- JP 2003342503 A
- JP 2015193729 A
- JP 5404669 B
- JP 2015025076 A
- WO 2021192720 A
- JP 54059936 A
- JP S5459936 A
- JP 2003306623 A
- WO 2020195360 A


### Non-patent literature cited in the description


- Encyclopedia of Pigments. **W. HERBST ; K. HUNGER**. Industrial Organic Pigments. Seishiro Ito, 2000